# EUROPÄISCHE PATENTSCHRIFT

(11) **EP 0 639 125 B1**
(45) Veröffentlichungstag und Bekanntmachung des Hinweises auf die Patenterteilung: **11.09.1996**
(21) Anmeldenummer: 93909925.5
(22) Anmeldetag: 08.05.1993
(51) Int. Cl.: B60N 3/04, B60R 13/08

(54) **DÄMPFUNGSMATTE ZUM ENTDRÖHNEN FÜR FAHRZEUGE**
SOUND-DEADENING MAT FOR VEHICLES
TAPIS DE SOL VISANT A AMORTIR LE SON DANS DES VEHICULES AUTOMOBILES

(30) Priorität: 09.05.1992 DE 4214757
(43) Veröffentlichungstag der Anmeldung: 22.02.1995
(73) Patentinhaber: Pelzer, Helmut, D-58313 Herdecke (DE)
(72) Erfinder: Pelzer, Helmut, D-58313 Herdecke (DE)
(74) Vertreter: Jönsson, Hans-Peter, Dr.Dipl.-Chem.
(86) Internationale Anmeldenummer: EP9301132
(87) Internationale Veröffentlichungsnummer: WO9323267

(56) Entgegenhaltungen:
- EP-A- 0 064 677
- DE-U- 8 201 511
- DE-U- 8 907 030
- FR-A- 2 273 336
- Week 23, Derwent Publications Ltd., London, GB; AN 83-54614K & JP-A-58 070 761 (MITSUI) 27. APRIL 1983
- Week 15, Derwent Publications Ltd., London, GB; AN 93-120998 & JP-A-5 058 229 (BRIDGESTONE) 9. MÄRZ 1993

## Beschreibung

Die Erfindung betrifft eine Dämpfungsmatte zum Entdröhnen insbesondere der Böden in Personenkraftfahrzeugen.

Bekannt und allgemein praktiziert ist das Entdröhnen durch einen aufgeklebten Entdröhnbelag beispielsweise aus Bitumen, durch aufgeschmolzene Kunststoffschichten, usw. Dieses Verfahren ist aufwendig, die Wirkung begrenzt. Außerdem ist die Entdröhnschicht bei der Wiederverwertung der Fahrzeugböden (Recycling) nicht mehr oder nur unter sehr hohem Aufwand von dem beschichteten Blech zu entfernen.

Die DE-U-89 07 030.5 betrifft eine, ein Formteil bildende Verbundmaterialbahn, insbesondere zum Stabilisieren und/oder Entdröhnen von Blechen oder dergleichen. Die Verbundmaterialbahn ist unter anderem dadurch gekennzeichnet, daß sie eine Schwerschicht auf PUR-Basis, die unter Wärmeeinfluß aushärtbar ist, und eine Haftschicht aufweist. Diese Druckschrift bildet den Oberbegriff des geltenden Anspruchs 1.

Aufgabe der Erfindung ist die Verbesserung der Dämpfungswirkung sowie die Sicherstellung der problemlosen Wiederverwertung der Teile im Recycling. Diese Aufgabe wird erfindungsgemäß bei einer Dämpfungsmatte der eingangs beschriebenen Art dadurch gelöst, daß die Dämpfungsmatte ohne verbindende Kleb- oder Haftschicht auf den zu entdröhnenden Fahrzeugboden aufgelegt ist, aus einer Weichschicht mit geringem Strömungswiderstand und einen Dämpfungsfaktor von größer als 0,05 und einer mit dieser verbundenen Schwerschicht (3) mit einer Dicke unter ca. 4 mm,
dadurch gekennzeichnet,
daß die Dämpfungsmatte ohne verbindende Kleb- oder Haftschicht auf den zu entdröhnenden Fahrzeugboden aufgelegt ist,
daß die Gesamtdicke der Matte (2,3) geringer ist als ca. 10 mm;
daß die Schwerschicht (3) biegeweich mit einem niedrigen Elastizitätsmodul ist,
daß die Dicke der Weichschicht (2) einen Wert von weniger als ca. 6 mm aufweist und
daß der Elastizitätsmodul der Matte unter einem Wert von ca. 5 x 10⁹ N/m² liegt.

Bevorzugt weist die Schwerschicht einen Elastizitätsmodul auf, der kleiner ist als ca. 4,5 x 10⁹ N/m². Dabei wird ein Wert bevorzugt, der kleiner ist als 3,5 bis 4 x 10⁹ N/m². Die Schwerschicht kann vorteilhaft aus einem mit Füllstoffen mit einem Raumgewicht von ca. 1.000 bis 2.000 kg/m³ beladenen Kunststoff, insbesondere auf EPDM- oder EVA-Basis, bestehen.

Die Weichschicht der erfindungsgemäßen Dämpfungsmatte kann vorteilhaft aus einem PUR-, Polyäther- oder Polyesterschaum mit einem Raumgewicht zwischen ca. 10 und ca. 200 kg/m³, aber auch aus einem Vlies, einem Gewirke oder einer Nadelware bestehen. Bei einer besonderen Ausführungsform ist die Weichschicht durch eine auf die Rückseite der Schwerschicht aufgebrachte Beflockung gebildet. Als besonders gut zur Verwendung als Weichschicht geeignet haben sich an sich bekannte Schaumstoffe mit verzögertem Rückstellvermögen erwiesen.

Die erfindungsgemäße Dämpfungsmatte hat eine außerordentlich gute Wirksamkeit bewiesen. So ergab ein Versuch mit mehreren lose auf eine in Schwingungen versetzbare Stahlplatte aufgelegten erfindungsgemäßen Dämpfungsmatten mit einer Gesamtdikke zwischen 4 und 5 mm (Schwerschicht 2 mm, Weichschicht 3 mm bzw. 4 mm) als Abklingrate der Plattenschwingungen Werte zwischen 70 und 120 dB/sec, während Vergleichsmessungen mit Schmelzfolienbeschichtung (d = 2,5 mm) unter identischen Prüfbedingungen Werte zwischen 20 und 30 dB/sec ergaben. Die Wirkung der erfindungsgemäßen Matte war gänzlich unerwartet und in höchstem Maße überraschend, zumal die bisher in Forschung und Produktion beschrittenen Wege von dem durch die Erfindun begangenen weit ab liegen.

Eine Erklärungsmöglichkeit für die überraschend hohe Wirksamkeit der erfindungsgemäßen Dämpfungsmatte kann darin gesehen werden, daß sich möglicherweise die Dämpfung durch Gleitreibung in der Grenzschicht zwischen Wand und Zwischenschicht und die Dämpfung durch die Molekularreibung aus der Scherbelastung der Zwischenschicht zu einer hochwirksamen Kombination vereinigen. Von entscheidender Bedeutung ist jedenfalls, daß die Zwischenschicht nur durch Schwerkraftwirkung auf der angeregten Wand aufliegt.

Die beigegebene Figur zeigt eine beispielsweise Ausführungsform der erfindungsgemäßen Matte mit dem zu dämpfenden bzw. zu entdröhnenden Boden 1, der Weich- oder Zwischenschicht 2 und der Schwerschicht 3.

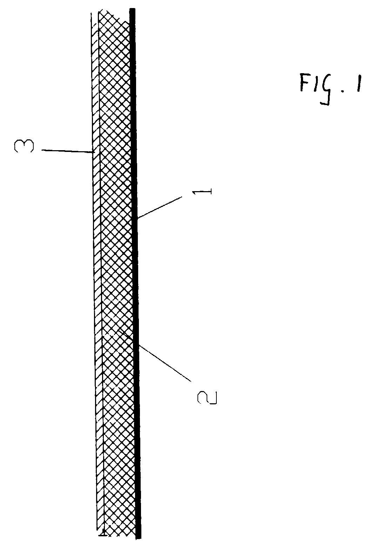

## Patentansprüche

1. Dämpfungsmatte, insbesondere zum Entdröhnen, insbesondere der Böden in Personenkraftfahrzeugen, aus einer Weichschicht (2) mit geringem Strömungswiderstand und einen Dämpfungsfaktor von größer als 0,05 und einer mit dieser verbundenen Schwerschicht (3) mit einer Dicke unter ca. 4 mm, dadurch gekennzeichnet,
daß die Dämpfungsmatte ohne verbindende Kleb- oder Haftschicht auf den zu entdröhnenden Fahrzeugboden aufgelegt ist,
daß die Gesamtdicke der Matte (2,3) geringer ist als ca. 10 mm;
daß die Schwerschicht (3) biegeweich mit einem niedrigen Elastizitätsmodul ist,
daß die Dicke der Weichschicht (2) einen Wert von weniger als ca. 6 mm aufweist und
daß der Elastizitätsmodul der Matte unter einem Wert von ca. 5 x 10⁹ N/m² liegt.

2. Dämpfungsmatte nach Anspruch 1, dadurch gekennzeichnet, daß die Gesamtdicke der Matte (2,3) geringer ist als ca. 8 mm.

3. Dämpfungsmatte nach Anspruch 1 oder 2, dadurch gekennzeichnet, daß die Schwerschicht (3) eine Dicke von maximal 3 mm aufweist.

4. Dämpfungsmatte nach Anspruch 1 oder 2, dadurch gekennzeichnet, daß die Schwerschicht (3) eine Dicke von ca. 1 bis 2,5 mm aufweist.

5. Dämpfungsmatte nach einem der Ansprüche 1 bis 4,
dadurch gekennzeichnet, daß
die Weichschicht (2) eine Dicke zwischen ca. 2 mm und 5 mm aufweist.

6. Dämpfungsmatte nach einem der Ansprüche 1 bis 5,
dadurch gekennzeichnet, daß
die Schwerschicht (3) einen Elastizitätsmodul aufweist, der kleiner ist als ca. 4,5 x 10⁹ N/m².

7. Dämpfungsmatte nach einem der Ansprüche 1 bis 5,
dadurch gekennzeichnet, daß
die Schwerschicht (3) einen Elastizitätsmodul aufweist, der kleiner ist als 3,5 bis 4 x 10⁹ N/m².

8. Dämpfungsmatte nach einem der Ansprüche 1 bis 7
dadurch gekennzeichnet, daß
die Schwerschicht (3) aus einem mit Füllstoffen mit einem Raumgewicht von ca. 1.000 bis 2.000 kg/m³ beladenen Kunststoff, insbesondere auf EPDM- oder EVA-Basis, besteht.

9. Dämpfungsmatte nach einem der Ansprüche 1 bis 8,
dadurch gekennzeichnet. daß
die Weichschicht (2) aus einem PUR-Schnittschaumstoff auf Polyäther- oder Polyesterbasis mit einem Raumgewicht zwischen ca. 10 und ca. 200 kg/m³ besteht.

10. Dämpfungsmatte nach einem der Ansprüche 1 bis 9,
dadurch gekennzeichnet, daß
die Weichschicht (2) aus einem Vlies, einem Gewirke oder einer Nadelware besteht.

11. Dämpfungsmatte nach einem der Ansprüche 1 bis 9,
dadurch gekennzeichnet, daß
die Weichschicht (2) durch eine auf die Rückseite der Schwerschicht (3) aufgebrachte Beflockung gebildet ist.

12. Dämpfungsmatte nach einem der Ansprüche 1 bis 9,
dadurch gekennzeichnet, daß
die Weichschicht (2) aus einem Schaumstoff mit verzögertem Rückstellvermögen besteht.

## Claims

1. An attenuation mat, particularly for sound absorbing, especially of the floors of passenger cars, consisting of a soft layer (2) with low flow resistance and an attenuation factor of more than 0.05 and a heavy layer (3) connected therewith having a thickness of below about 4 mm, characterized in that
said attenuation mat is laid on the vehicle floor to be sound absorbed without a connecting bonding or adhesive layer;
the total thickness of the mat (2,3) is less than about 10 mm;
said heavy layer (3) is flexible with a low elastic modulus;
the thickness of said soft layer (2) is less than about 6 mm; and
the elastic modulus of the mat is less than about 5 x 10⁹ N/m².

2. The attenuation mat according to claim 1, characterized in that the total thickness of the mat (2,3) is less than about 8 mm.

3. The attenuation mat according to claim 1 or 2, characterized in that said heavy layer (3) has a thickness of not more than 3 mm.

4. The attenuation mat according to claim 1 or 2, characterized in that said heavy layer (3) has a thickness of from about 1 to 2.5 mm.

5. The attenuation mat according to any of claims 1 to 4, characterized in that said soft layer (2) has a thickness ranging between about 2 mm and 5 mm.

6. The attenuation mat according to any of claims 1 to 5, characterized in that said heavy layer (3) has an elastic modulus of smaller than about 4.5 x 10⁹ N/m².

7. The attenuation mat according to any of claims 1 to 5, characterized in that said heavy layer (3) has an elastic modulus of smaller than 3.5 x 10⁹ to 4 x 10⁹ N/m².

8. The attenuation mat according to any of claims 1 to 7, characterized in that said heavy layer (3) consists of a plastic material loaded with fillers having a bulk density of from about 1,000 to 2,000 kg/m³, in particular based on EPDM or EVA.

9. The attenuation mat according to any of claims 1 to 8, characterized in that said soft layer (2) consists of off-cuts of polyurethane based on polyethers or polyesters having a bulk density of between about 10 and about 200 kg/m³.

10. The attenuation mat according to any of claims 1 to 9, characterized in that said soft layer (2) consists of a non-woven, a knitting or a needled fabric.

11. The attenuation mat according to any of claims 1 to 9, characterized in that said soft layer (2) is formed by a flocked coating applied on the backside of said heavy layer (3).

12. The attenuation mat according to any of claims 1 to 9, characterized in that said soft layer (2) consists of a foam with retarded recovery.

## Revendications

1. Tapis d'amortissement, en particulier pour absorber les sons, en particulier des planchers dans des véhicules automobiles, constitué par une couche souple (2), avec une faible impédance acoustique et un facteur d'amortissement supérieur à 0,05, et une couche lourde (3), reliée à celle-ci, d'une épaisseur inférieure à environ 4 mm, caractérisé en ce
que le tapis d'amortissement est posé sans couche collante ou adhérente de liaison, sur le plancher de véhicule dont les sons doivent être absorbés,
que l'épaisseur totale du tapis (2, 3) est inférieure à environ 10 mm,
que la couche lourde (3) est souple et flexible avec un faible module d'élasticité,
que l'épaisseur de la couche souple (2) présente une valeur de moins d'environ 6 mm et
que le module d'élasticité du tapis se situe au-dessous d'une valeur d'environ 5 x 10⁹ N/m².

2. Tapis d'amortissement selon la revendi-cation 1, caractérisé en ce que l'épaisseur totale du tapis (2, 3) est inférieure à environ 8 mm.

3. Tapis d'amortissement selon la revendi-cation 1 ou 2, caractérisé en ce que la couche lourde (3) présente une épaisseur de 3 mm au maximum.

4. Tapis d'amortissement selon la revendi-cation 1 ou 2, caractérisé en ce que la couche lourde (3) présente une épaisseur d'environ 1 à 2,5 mm.

5. Tapis d'amortissement selon l'une des revendications 1 à 4, caractérisé en ce que la couche souple (2) présente une épaisseur entre environ 2 mm et 5 mm.

6. Tapis d'amortissement selon l'une des revendications 1 à 5, caractérisé en ce que la couche lourde (3) présente un module d'élasticité qui est inférieur à environ 4,5 x 10⁹ N/m².

7. Tapis d'amortissement selon l'une des revendications 1 à 5, caractérisé en ce que la couche lourde (3) présente un module d'élasticité qui est inférieur à 3,5 à 4 x 10⁹ N/m².

8. Tapis d'amortissement selon l'une des revendications 1 à 7, caractérisé en ce que la couche lourde (3) est constituée par une matière synthétique chargée de matières de remplissage avec un poids spécifique d'environ 1000 à 2000 kg/m³, en particulier à base d'EPDM ou d'EVA.

9. Tapis d'amortissement selon l'une des revendications 1 à 8, caractérisé en ce que la couche souple (2) est constituée par un produit alvéolaire découpé en polyuréthane à base de polyéther ou de polyester, avec un poids spécifique entre environ 10 et environ 200 kg/m³.

10. Tapis d'amortissement selon l'une des revendications 1 à 9, caractérisé en ce que la couche souple (2) est constituée par un non-tissé, un tricotage ou un produit aiguilleté.

11. Tapis d'amortissement selon l'une des revendications 1 à 9, caractérisé en ce que la couche souple (2) est formée par un flocage appliqué sur le revers de la couche lourde (3).

12. Tapis d'amortissement selon l'une des revendications 1 à 9, caractérisé en ce que la couche souple (2) est constituée par un produit alvéolaire à reprise élastique retardée.
